# EUROPEAN PATENT APPLICATION

(11) **EP 1 965 262 A1**
(43) Date of publication of application: **03.09.2008**
(21) Application number: 08151562.9
(22) Date of filing: 18.02.2008
(51) Int. Cl.: G03G 9/08, G03G 9/093

(54) **Core-shell polymer particles**

(30) Priority: 01.03.2007 US 680876
(71) Applicant: Xerox Corporation, Rochester, New York 14644 (US)
(72) Inventor: Keoshkerian, Barkev, Thornhill Ontario L4J 7E8 (CA); Farrugia, Valerie M., Oakville Ontario L6H 7V8 (CA); Vong, Cuong, Hamilton Ontario L9C 3H5 (CA)
(74) Representative: Grünecker, Kinkeldey, Stockmair & Schwanhäusser Anwaltssozietät

(57) **Abstract**

Disclosed herein are nano-sized particles having a core portion comprising a crystalline polymer and a shell portion comprising a polymer derived from at least one monomer not miscible with the crystalline polymer of the shell portion.

## Description

### BACKGROUND

Disclosed herein are nano-sized particles having a core portion comprising a crystalline polymer and a shell portion comprising a polymer not miscible with the crystalline polymer of the shell portion. The nano-sized particles disclosed herein maintain the ultra low melt properties of the crystalline polymer. The nano-sized particles disclosed herein may be utilized in generating emulsion aggregation toner particles.

### REFERENCES

Present processes for preparation of functionalized nano-sized polymer architectures in a commercially viable manner are burdensome. Typically, preparation of nano-sized polymer particles results in low yields and requires large amounts of surfactant. Moreover, development time, material costs, and surfactant removal costs render conventional preparations inefficient and expensive.

In an example of the above-mentioned processes, preparation of nano-sized polymer particles occurs via a free radical polymerization process with the use of large amounts of surfactants where the ratio of surfactant to monomer is about 1:1. The nano-sized particle is formed when, during the initiation process, the radical enters the micelle (about 5 nm). However, micelles tend to form and deform throughout the polymerization process. This ultimately limits the solids content of such polymerizations. In fact, these processes generally result in a solids content of less than 10% with higher loadings resulting in reduced nano-sized particle product and particle size of up to only about 50 nm.

Recently, some research has shown that using a starve fed latex polymerization process to prepare nano-sized latex particles can produce final surfactant to monomer ratios around 1:15. This is achieved by keeping the actual surfactant to monomer ratio at any one time during the starve feed process at around 1:1. However, even with these improved methods, the particles tend to grow uncontrollably as the polymerization proceeds because micelle formation is dynamic and ongoing and the excess surfactant stabilizes the larger particles.

Copending Application No. 11/613,736 to Keoshkerian, filed December 20, 2006, discloses processes for preparing functional polymer particles on a water dispersible polymeric scaffolding using starve fed free radical polymerization.

However, nano-sized particles capable of being used as templates for growing a shell polymer that have emulsion/aggregation functionality and are capable of being used as toner particles, while still exhibiting the ultra low melt properties of a crystalline polymer, are still desired.

### SUMMARY

In embodiments, disclosed herein is a nano-sized particle having a core portion and a shell portion, wherein the core portion comprises a crystalline polymer, wherein the shell portion comprises a polymer derived from at least one monomer not miscible with the crystalline polymer of the core, and wherein the nano-sized particle has a melting point of from about 50°C to about 140°C and a recrystallization point of from about 30°C to about 80°C.

In further embodiments, disclosed is a process for making emulsion aggregation toner particles, comprising mixing nano-sized particles, a coagulating agent, and an optional colorant, aggregating the nano-sized particles to form toner particles to a size from about 3 to about 20 microns, halting the aggregation of the toner particles, and coalescing the toner particles, wherein the nano-sized particles comprise a core portion and a shell portion, wherein the core portion comprises a crystalline polymer, and wherein the shell portion comprises a polymer derived from at least one monomer not miscible with the crystalline polymer of the core.

In yet further embodiments, disclosed is an emulsion aggregation toner composition comprising toner particles including a binder resin and optionally a colorant, wherein the binder resin includes nano-sized particles comprising a core portion and a shell portion, wherein the core portion comprises a crystalline polymer, and wherein the shell portion comprises a polymer derived from at least one monomer not miscible with the crystalline polymer of the core.

### EMBODIMENTS

The present invention provides in embodiments:
(1) A nano-sized particle having a core portion and a shell portion,
   wherein the core portion comprises a crystalline polymer,
   wherein the shell portion comprises a polymer derived from at least one monomer not miscible with the crystalline polymer of the core, and
   wherein the nano-sized particle has a melting point of from about 50°C to about 140°C and a recrystallization point of from about 30°C to about 80°C.
(2) The nano-sized particle according to (1), wherein the core portion and/or the shell portion has a hydrophilic functional group selected from a carboxyl, a sulfonic acid, an amine, an amine salt, and a phosphonic salt.
(3) The nano-sized particle according to (1), wherein the crystalline polymer is selected from the group consisting of a crystalline polyester, a wax polymer, a polyolefin, polyketone, polyamide, and mixtures thereof.
(4) The nano-sized particle according to (3), wherein the crystalline polyester is selected from the group consisting of polyethylene-terephthalate, polypropylene-terephthalate, polybutylene-terephthalate, polypentylene-terephthalate, polyhexalene-terephthalate, polyheptadene-terephthalate, polyoctalene-terephthalate, polyethylene-sebacate, polypropylene sebacate, polybutylene-sebacate, polyethylene-adipate, polypropylene-adipate, polybutylene-adipate, polypentylene-adipate, polyhexalene-adipate, polyheptadene-adipate, polyoctalene-adipate, polyethylene-glutarate, polypropylene-glutarate, polybutylene-glutarate, polypentylene-glutarate, polyhexalene-glutarate, polyheptadene-glutarate, polyoctalene-glutarate polyethylene-pimelate, polypropylene-pimelate, polybutylene-pimelate, polypentylene-pimelate, polyhexalene-pimelate, polyheptadene-pimelate, poly(propoxylated bisphenol-fumarate), poly(propoxylated bisphenol-succinate), poly(propoxylated bisphenol-adipate), poly(propoxylated bisphenol-glutarate), and mixtures thereof.
(5) The nano-sized particle according to (3), wherein the wax polymer is selected from the group consisting of polyethylene, polypropylene, polypentene, polydecene, polydodecene, polytetradecene, polyhexadecene, polyoctadene, polycyclodecene and mixtures thereof.
(6) The nano-sized particle according to (3), wherein the polyolefin is selected from the group consisting of bi-modal molecular weight polyolefins, functional polyolefins, acidic polyolefins, hydroxyl polyolefins, branched polyolefins and mixtures thereof.
(7) The nano-sized particle according to (1), wherein the polymer is from at least one monomer selected from the group consisting of styrene, acrylate, amides, amines, methacrylate, butylacrylate, beta-carboxyethylacrylate, butadiene, isoprene, acrylic acid, methacrylic acid, itaconic acid, acrylonitrile, benzene, divinylbenzene, and mixtures thereof.
(8) The nano-sized particle according to (1), wherein the core portion is from about 10 weight percent to about 90 weight percent of the nano-sized particles, and the shell portion is from about 90 weight percent to about 60 weight percent of the nano-sized particles.
(9) The nano-sized particle according to (1), wherein the melting point is from about 75°C to about 95°C, and the recrystallization point is from about 35°C to about 60°C.
(10) The nano-sized particle according to (1), wherein the nano-sized particles have an average particle size of from about 1 nm to about 100 nm.
(11) A process for making emulsion aggregation toner particles, comprising:
   mixing nano-sized particles, a coagulating agent, and optionally a colorant;
   aggregating the nano-sized particles to form toner particles to a size from about 1 to about 20 microns;
   halting the aggregation of the toner particles; and
   coalescing the toner particles,
   wherein the nano-sized particles comprise a core portion and a shell portion, wherein the core portion comprises a crystalline polymer, and wherein the shell portion comprises a polymer derived from at least one monomer not miscible with the crystalline polymer of the core.
(12) The process according to (11), wherein the mixing occurs at a temperature from about 50°C to about 80°C, growth of the toner particles are halted by addition of a base, and coalescing occurs at a temperature from about 60°C to about 98°C.
(13) The process according to (11), wherein the core portion and/or the shell portion has a hydrophilic functional group selected from a carboxyl, a sulfonic acid, an amine, an amine salt, and a phosphonic salt.
(14) The process according to (11), wherein the crystalline polymer is selected from the group consisting of a crystalline polyester, a wax polymer, a polyolefin, a polyketone, a polyamide, and mixtures thereof.
(15) The process according to (11), wherein the polymer is from at least one monomer selected from the group consisting of styrene, acrylate, amides, amines, methacrylate, butylacrylate, beta-carboxyethylacrylate, butadiene, isoprene, acrylic acid, methacrylic acid, itaconic acid, acrylonitrile, benzene, divinylbenzene, and mixtures thereof.
(16) An emulsion aggregation toner composition comprising toner particles including a binder resin and optionally a colorant,
   wherein the binder resin includes nano-sized particles comprising a core portion and a shell portion, wherein the core portion comprises a crystalline polymer, and wherein the shell portion comprises a polymer derived from at least one monomer not miscible with the crystalline polymer of the core.
(17) The toner composition according to (16), wherein the core portion and/or the shell portion has a hydrophilic functional group selected from a carboxyl, a sulfonic acid, an amine, an amine salt, and a phosphonic salt.
(18) The toner composition according to (16), wherein the crystalline polymer is selected from the group consisting of a crystalline polyester, a wax polymer, a polyolefin, a polyketone, a polyamide, and mixtures thereof.
(19) The toner composition according to (16), wherein the polymer is from at least one monomer selected from the group consisting of styrene, acrylate, amides, amines, methacrylate, butylacrylate, beta-carboxyethylacrylate, butadiene, isoprene, acrylic acid, methacrylic acid, itaconic acid, acrylonitrile, benzene, divinylbenzene, and mixtures thereof.
(20) The toner composition according to (16), wherein the toner particles have an average particle size of from about 1 micron to about 100 microns.
(21) The toner composition according to (16), wherein the nano-sized particles are present from about 30 weight percent to about 98 weight percent of the toner particles.

Disclosed herein are nano-sized particles having aggregation/coalescence functionality and ultra low melt properties. The disclosed nano-sized particles may be utilized in emulsion aggregation (EA) toners. In embodiments, the nano-sized particles disclosed herein comprise a core comprised of an aqueous dispersible crystalline polymer, and a shell formed over the core comprised of any polymer, such as a monomer, that is not miscible with the crystalline polymer of the core.

The term "nano-sized" when referring to the average particle size refers, for example, to average particle sizes of from about 1 nanometer to about 100 nanometers, as understood by one ordinarily skilled in the art. For example, most nano-sized particles are from about 3 nm to about 50 nm or from about 5 nm to about 20 nm. However, embodiments are not limited to "nano-sized" particles and may, in fact, include any particle size in the nano-range from about 1 nanometer to about 1 micron, but less than 1 micron.

Likewise, the term "micron-sized" when referring to average particle size refers, for example, to average particle sizes of from about 1 micron to about 100 microns. For example, micron-sized particles have average particle sizes of from about 1 micron to about 100 microns, such as from about 3 microns to about 75 microns or from about 5 microns to about 50 microns. Such micron-sized particles may be used herein as toner particles.

The nano-sized core-shell particles described herein exhibit ultra low melt properties. Ultra low melt refers to, for example, the particles disclosed herein having a melting point of at least about 70°C, such as from about 70°C to about 105°C or from about 75°C to about 95°C, and a recrystallization point of at least about 30°C, such as from about 30°C to about 65°C or from about 35°C to about 60°C.

The core portion of the particles described herein may be from about 10 weight percent to about 90 weight percent, such as from about 45 weight percent to about 85 weight percent or from about 50 weight percent to about 75 weight percent, of the particles described herein. The shell portion of the particles described herein may be from about 10 weight percent to about 90 weight percent, such as from about 13 weight percent to about 55 weight percent or from about 15 weight percent to about 50 weight percent, of the particles described herein.

Examples of suitable polymers that can be used for forming the core include, but are not limited to, crystalline polymers such as crystalline polymers formed from polyester-based monomers, wax polymers, polyolefins, polyketones, polyamides, and the like.

Illustrative examples of polyester-based polymers selected for the process and the core portion of the particles of the present disclosure include any of the various polyesters, such as polyethylene-terephthalate, polypropylene-terephthalate, polybutylene-terephthalate, polypentylene-terephthalate, polyhexalene-terephthalate, polyheptadene-terephthalate, polyoctalene-terephthalate, polyethylene-sebacate, polypropylene sebacate, polybutylene-sebacate, polyethylene-adipate, polypropylene-adipate, polybutylene-adipate, polypentylene-adipate, polyhexalene-adipate, polyheptadene-adipate, polyoctalene-adipate, polyethylene-glutarate, polypropylene-glutarate, polybutylene-glutarate, polypentylene-glutarate, polyhexalene-glutarate, polyheptadene-glutarate, polyoctalene-glutarate polyethylene-pimelate, polypropylene-pimelate, polybutylene-pimelate, polypentylene-pimelate, polyhexalene-pimelate, polyheptadene-pimelate, poly(propoxylated bisphenol-fumarate), poly(propoxylated bisphenol-succinate), poly(propoxylated bisphenol-adipate), poly(propoxylated bisphenol-glutarate), SPAR^{™} (Dixie Chemicals), BECKOSOL^{™} (Reichhold Chemical Inc), ARAKOTE^{™} (Ciba-Geigy Corporation), HETRON^{™} (Ashland Chemical), PARAPLEN^{™} (Rohm & Hass), POLYLITE^{™} (Reichhold Chemical Inc), PLASTHALL^{™} (Rohm & Hass), CYGAL^{™} (American Cyanamide), ARMCO^{™} (Armco Composites), ARPOL^{™} (Ashland Chemical), CELANEX^{™} (Celanese Eng), RYNITE^{™} (DuPont), STYPOL^{™} (Freeman Chemical Corporation) mixtures thereof and the like. Particularly suitable polyester-based resins are crystalline polyester resins.

Other examples of polymer-based resins selected for the core of the particles disclosed herein include waxes or polyolefins, such as polyethylene, polypropylene, polypentene, polydecene, polydodecene, polytetradecene, polyhexadecene, polyoctadene, and polycyclodecene, polyolefin copolymers, mixtures of polyolefins, bi-modal molecular weight polyolefins, functional polyolefins, acidic polyolefins, hydroxyl polyolefins, branched polyolefins, for example, such as those available from Sanyo Chemicals of Japan as VISCOL 550P^{™} and VISCOL 660P^{™}, Mitsui "Hiwax" NP055 and NP105, or wax blends such as MicroPowders, Micropro-440 and 440w.

The crystalline polymer suitable for use herein may have a melting point of less than about 70°C, such as from about 55°C to about 70°C or from about 60°C to about 68°C, and a recrystallization point of less than about 55°C, such as from about 30°C to about 50°C or from about 35°C to about 45°C.

In order for the crystalline polymer to be hydrophilic and capable of being dispersed in liquid mediums, such as water, the polymer may include hydrophilic functional groups, such as carboxyl groups, sulfonic acids, amines, amine salts, phosphonic salts and the like. Without a shell masking the functional groups of the core portion, the formed particles would absorb water and thus may perform poorly in humid environments when utilized in toner formulations. Thus, the shell portion described herein may mask the properties of the functional groups of the core portion, thereby forming particles suitable for use as toner particles and in EA toner formation processes. Alternatively, the shell portion of the particles described herein may also include a hydrophilic functional group. Suitable hydrophilic functional groups for the shell portion include those described above. In other words, the core portion and/or the shell portion may include a hydrophilic functional group.

In embodiments, the polymers suitable for making the shell are not limited, and include polymers derived from monomers such as any one or more of for example, styrene, methacrylates, amides, amines, acrylates such as methacrylates, butylacrylates, beta-carboxyethylacrylate, and the like, butadiene, isoprene, acrylic acid, methacrylic acid, itaconic acid, acrylonitrile, benzenes such as divinylbenzene, and the like. In particular embodiments, the crystalline polyolefin may be maleated olefins, such as CERAMER (Baker Hughes). Known chain transfer agents, for example dodecanethiol or carbon tetrabromide, can be utilized to control the molecular weight properties of the polymer. Any suitable method for forming the polymer, suitable for making the shell portion, from the monomers may be used without restriction.

Mixtures of two or more of the above polymers can also be used, if desired.

In embodiments, the disclosed nano-sized core-shell particles are generated by a two-step process of preparing the polymer shell on a core portion using starve fed free radical polymerization. The first step generally comprises forming or providing a dispersion of crystalline polymer particles, also referred to as a core portion or template, in a liquid medium in the presence or absence of a surfactant. The second step generally comprises forming the polymer shell on the core portion using starve fed free radical polymerization. The processes provide polymer particles having average particle sizes in the nanometer to micron size range.

In the first step of the process, there is formed or otherwise provided a dispersion of polymer particles in a liquid medium in the presence or absence of a surfactant. This dispersion serves as a seed latex for subsequent particle growth in the starve fed free radical polymerization. This dispersion can be, for example, formed by dispersing any suitable crystalline polymer, as disclosed above, into a liquid medium in the presence or absence of a surfactant, where the polymer self-dissipates or can be dispersed to form nano-sized particles in the liquid medium. Upon heating the dispersion of crystalline polymer particles in the liquid medium, the crystalline polymers form nano-sized particles that are used as templates for growing the shell polymers.

The core may include any suitable hydrophilic functional group that can be used in forming or providing the dispersion of crystalline polymer particles in the liquid medium. Suitable hydrophilic groups include, for example, carboxyl groups, sulfonic acids, amines, amine salts, phosphonic salts, and the like. In embodiments, a carboxyl group is used as it can be used to readily facilitate crystalline polymer dispersions.

In embodiments, the nano-sized particles forming the templates, or the core portion of the nano-sized particles, have an average particle size of from about 1 nm to about 100 nm, such as from about 2 nm to about 40 nm, or from about 3 nm to about 15 nm. The nano-sized particles can then be used in an aggregation coalescence process to form toner sized particles greater than 1 micron.

Any suitable liquid medium can be used in forming or providing the dispersion of crystalline polymer particles provided the polymer has functional groups that can stabilize the polymer in the liquid. Thus, for example, suitable liquid mediums include water, such as deionized water, other inorganic solvents, organic solvents, ISOPAR and the like. For example, polymethylmethacrylate, with block or random nonpolar groups that stabilize the polymer in ISOPAR, can be used. In embodiments, water is used as it can be used to readily form dispersions of various hydrophilic polymers.

Any suitable surfactant may be used in forming or providing the dispersion of polymer particles. Thus, for example, surfactants in amounts of about 0.01 weight percent to about 15 weight percent, or preferably about 0.5 weight percent to about 5 weight percent of the aqueous solution in embodiments may be used. In the embodiments, DOWFAX is used as it can be used to readily facilitate polymer dispersions. Of course, any suitable surfactant can be used, if desired.

Examples of suitable surfactants that can be used for forming the polymer scaffold thus include, but are not limited to, nonionic surfactants such as dialkylphenoxypoly(ethyleneoxy) ethanol, available from Rhone-Poulenc as IGEPAL CA-210^{™}, IGEPAL CA-520^{™}, IGEPAL CA-720^{™}, IGEPAL CO-890^{™}, IGEPAL CO-720^{™}, IGEPAL CO-290^{™}, IGEPAL CA-210^{™}, ANTAROX 890^{™} and ANTAROX 897^{™}. Examples of anionic surfactants include sodium dodecylsulfate (SDS), sodium dodecylbenzene sulfonate, sodium dodecylnaphthalene sulfate, dialkyl benzenealkyl, sulfates and sulfonates, adipic acid, available from Aldrich, NEOGEN R^{™}, NEOGEN SC^{™} available from Kao, DOWFAX 2A1 (hexa decyldiphenyloxide disulfonate) and the like, among others. For example, an effective concentration of the nonionic or anionic surfactant is, in embodiments, from about 0.01 percent to about 15 percent by weight, or from about 0.5 percent to about 5 percent by weight of the aqueous solution.

The liquid medium and crystalline polymer are generally present in the dispersion or latex in any suitable amount to provide the desired dispersion. For example, in embodiments, the polymer may be present in the dispersion in amounts of from about 1 percent to about 75 percent by weight of the dispersion, such as from about 5 percent to about 50 percent or from about 10 percent to about 25 percent by weight of the dispersion.

Once the polymer is heated in the liquid medium it self-aggregates to form nano-sized stable particles and thus forms the core template upon which the shell polymer can then be grown by a starve fed radical polymerization. In embodiments, the polymer dispersion or latex is stirred and heated to a temperature of from about 30°C to about 110°C, such as from about 45°C to about 95°C or from about 60°C to about 90°C.

The crystalline polymer particle growth can be conducted in any suitable manner, such as by free radical polymerization, for example by starve feed free radical polymerization. Starve feed polymerization is desired, in embodiments, because it allows for more precise control of particle size growth and loading concentration. The size of the particle may be controlled by the addition of the monomer. Specifically, the particle size is controlled by the amount of monomer added, in that, as the monomer is added, it polymerized on the core and further monomer addition keeps polymerizing on the shell.

To form the shell portion, further polymerization may be initiated. To initiate polymerization, a suitable initiator and suitable monomer are added to the polymer dispersion or latex.

Desirably, all of the initiator is added at the same time, either prior to monomer addition or at the start of monomer addition. However, the initiator can also be metered in over time. In embodiments, any suitable initiator may be used. Examples of useful optional free radical initiators that can be selected include azo-type initiators such as 2-2`-azobis(dimethyl-valeronitrile), azobis(isobutyronitrile), azobis(cyclohexane-nitrite), azobis(methyl-butyronitrile), mixtures thereof, and the like, peroxide initiators such as benzoyl peroxide, lauroyl peroxide, methyl ethyl ketone peroxide, isopropyl peroxy-carbonate, 2,5-dienethyl-2,5-bas(2-ethylhexanoyl-peroxy)hexane, di-tert-butyl peroxide, cumene hydroperoxide, dichlorobenzoyl peroxide, potassium persulfate, ammonium persulfate, sodium bisulfate, combination of potassium persulfate, sodium bisulfate and the like, and mixtures thereof. Other useful free radical initiators will become readily apparent to one of skill in the art based on the present disclosure. An effective quantity of an initiator is generally about 0.01 percent to about 8 percent by weight of the monomer, such as from about 0.05 percent to about 6 percent or from about 0.1 percent to about 5 percent by weight of the monomer.

To proceed with polymer particle growth, the desired monomer or monomers are next added to the polymer dispersion or latex. Selection of specific monomer or monomers can be conducted, for example, to provide desired polymer particle properties, structure, or the like. In embodiments, any suitable monomer or monomers can be added for particle growth, including as long as they are not miscible with the crystalline polymer of the core portion. The monomer or monomers not being miscible with the crystalline polymer of the core portion is important because such a monomer does not penetarate the core and does not polymer ize anywhere in the particle. Instead, such monomer or monomer are located on the surface of the core and provide the desired core/shell structure. Such suitable monomers are discussed above. Thus, for example, different monomer or monomers may be utilized to obtain non-uniform particle chemistry. Alternatively, if two or more different monomers or mixtures of monomers are successively added during the polymer particle growth, then the final polymer particles would have the appearance of an onion, where successive concentric layers shell are formed of different polymers.

Furthermore, monomers not miscible with the particle may be used to design particle morphology. In embodiments, immiscible monomers exhibit phase separation from the newly formed polymer. In embodiments, the core-shell location will be effected by the hydrophilicity of the monomer and the crystalline polymer. Other modifications will be apparent based on the disclosure.

The addition of the monomer or monomers to the crystalline polymer dispersion or latex can be conducted by manual, mechanical, electronic, automatic, or the like, drop-wise or metered addition. Drop-wise addition is desired, in embodiments, because it allows for more precise control of particle size growth and duration of polymerization. Further, drop-wise addition has the benefit of stabilizing and facilitating the starve feed polymerization process. These conditions are particularly suitable for desired particle growth. Of course, other methods of adding the monomer are suitable, if desired.

The addition of the monomer or monomers to the polymer dispersion or latex can be conducted for any suitable amount of time. For example, in embodiments, monomers can be added for a period of from about 1.5 hours to about 5 hours, such as a period of from about 2 hours to about 4 hours or from about 2.5 hours to about 3.5 hours. These periods are desired, in embodiments, because they provide a suitable polymerization reaction. However, it will be apparent that the addition time will be related to the desired addition rate and method, and the amount of monomer or monomers to be added.

Any suitable amount of monomer or monomers can be added to the crystalline polymer dispersion or latex during the monomer addition to obtain the desired particle size and structure. For example, in embodiments, drops of monomer solution are applied step-wise, such as a drop of monomer solution applied constantly over a period of time. In other embodiments, monomer solution can be added in the amount of about 1 mL to about 10 mL at a time. A drop-wise addition is desired, in embodiments, because it accomplishes controlled starve feed polymerization. Of course, any amount of monomer solution could be added at each step, as desired.

The addition of monomer or monomers can be added to the crystalline polymer dispersion or latex at any suitable rate of addition. For example, in some embodiments, the rate of monomer addition is constant and regular over the period of addition. In other embodiments, monomer addition can also be constant and irregular, or inconsistent and irregular, or the like. Constant rate of addition is desired, in embodiments, because it allows for consistent and stable polymer growth. Of course, any rate of addition can be used, if desired.

The reaction of monomer or monomers and the crystalline polymer dispersion or latex can occur by any suitable means. For example, in embodiments, the reaction occurs exothermically upon mixing of the monomer solution and the crystalline polymer dispersion. In embodiments, the reaction can also occur with heat application, shaking, stirring, pressure adjustment, or addition of catalysts, by manual or automatic means. A stand alone exothermic reaction or reactions is desired, in embodiments, because it provides a suitable environment for controlled polymerization. Of course, any factor influencing the reaction can be manipulated, if desired.

If desired or necessary, the reaction of monomer or monomers and the polymer dispersion or latex can be conducted at any suitable temperature, and can be conducted with or without external heating. For example, although an exotherm typically will occur upon reaction of the monomer or monomers and the crystalline polymer dispersion or latex, additional heating or cooling can also be applied during the reaction. In embodiments, the reaction mixture is desirably kept at about a constant temperature, to provide desirable reaction kinetics. For example, the reaction mixture can be maintained at a temperature of from about room temperature (approximately 25°C) to about 150°C, such as from about 30°C to about 125°C or from about 40°C to about 100°C, such as from about 60°C to about 80°C. In embodiments, heating is desired because it increases the reaction rate.

Furthermore, even after completion of monomer or monomers addition, further heating for a period of time can be conducted to assist with polymerization to high conversion. The heating can be conducted at any suitable temperature, such as at the reaction temperature maintained during monomer or monomers addition.

To proceed with and complete polymerization, after the heating period, the monomer-polymer dispersion reaction is next optionally cooled. The cooling can occur continuously or discontinuously, with interrupted periods of further heating or stagnant cooling rate, and naturally or mechanically, such as by refrigeration, or by any suitable means, and continues for as long or short as necessary for polymer growth to slow enough for suitable extraction. For example, in embodiments, cooling occurs continuously and naturally. Of course, any cooling methodology or apparatus is suitable, if desired.

One of skill in the art will understand that the monomer or monomers should not be miscible with the polymer of the core portion, in order for the polymer derived form the monomer or monomers to remain on the surface of the core portion, that is, for the polymer derived form the monomer or monomers to form a shell portion.

To complete polymer particle growth and extraction, after the cooling period, the particles can optionally be harvested. For example, any suitable manual, mechanical, electronic, or automatic means for optionally separating, drying, diluting, emulsifying, siphoning or the like, the cooled polymer solution can be used as a means for harvesting the functional polymers. Of course, use of any method, means, or apparatus to effectuate extraction is suitable, if desired. Alternatively, in embodiments, the dispersion of core-shell polymer particles can be directly used, without intermediate separation, in subsequent processes.

The above processes may be used, for example, to prepare nano-sized core-shell polymer particles in a latex process, and on a scale that can be used for commerical purposes. In particular, in embodiments, the processes can be used to prepare core-shell polymer particles having average particle sizes from the nano-sized to micron-sized, as described herein. Specifically, the core-shell particles may be from about 1 nm to about 500 nm, such as from about 3 nm to about 250 nm or from about 5 nm to about 100 nm. Furthermore, the particles disclosed herein may have a core shell morphology or onion like morphology, which may be achieved by varying the feed rates and monomer types, or by utilizing a monomer which is immiscible with the crystalline polymer of the core portion.

In further embodiments, the particles may undergo an EA process to form EA toner particles having a colorant. The generated nano-sized particles may be incorporated into the EA toner process as the starting binder resin of the toner. In such embodiments, a colorant may be added during the EA process and may be found throughout the formed EA toner particles.

As used herein, colorant includes pigment, dye, mixtures of dyes, mixtures of pigments, mixtures of dyes and pigments, and the like. The colorant is present in an amount of from about 2 weight percent to about 18 weight percent, such as from about 3 weight percent to about 15 weight percent or from about 4 weight percent to about 13 weight percent, of the particle or EA toner particle as described herein.

Suitable example colorants include, for example, carbon black like REGAL 330® magnetites, such as Mobay magnetites MO8029^{™} MO8060^{™}; Columbian magnetites; MAPICO BLACKS^{™} and surface treated magnetites; Pfizer magnetites CB4799^{™}, CB5300^{™}, CB5600^{™}, MCX6369^{™} ; Bayer magnetites, BAYFERROX 8600^{™}, 8610^{™}; Northern Pigments magnetites, NP-604^{™}, NP-608^{™}; Magnox magnetites TMB-100^{™}, or TMB-104^{™}; and the like. As colored pigments, there can be selected cyan, magenta, yellow, red, green, brown, blue or mixtures thereof. Specific examples of pigments include phthalocyanine HELIOGEN BLUE L6900^{™}, D6840^{™}, D7080^{™}, D7020^{™}, PYLAM OIL BLUE^{™}, PYLAM OIL YELLOW^{™} PIGMENT BLUE 1^{™} available from Paul Uhlich & Company, Inc., PIGMENT VIOLET 1^{™}, PIGMENT RED 48^{™}, LEMON CHROME YELLOW DCC 1026^{™}, E.D. TOLUIDINE RED^{™} and BON RED C^{™}available from Dominion Color Corporation, Ltd., Toronto, Ontario, NOVAPERM YELLOW FGL^{™}, HOSTAPERM PINK E^{™} from Hoechst, and CINQUASIA MAGENTA^{™} available from E.I. DuPont de Nemours & Company, and the like. Generally, colorants that can be selected are black, cyan, magenta, or yellow, and mixtures thereof. Examples of magentas are 2,9-dimethyl-substituted quinacridone and anthraquinone dye identified in the Color Index as CI 60710, CI Dispersed Red 15, diazo dye identified in the Color Index as CI 26050, CI Solvent Red 19, and the like. Illustrative examples of cyans include copper tetra(octadecyl sulfonamido) phthalocyanine, x-copper phthalocyanine pigment listed in the Color Index as CI 74160, CI Pigment Blue, and Anthrathrene Blue, identified in the Color Index as CI 69810, Special Blue X-2137, and the like. Illustrative examples of yellows are diarylide yellow 3,3-dichlorobenzidene acetoacetanilides, a monoazo pigment identified in the Color Index as CI 12700, CI Solvent Yellow 16, a nitrophenyl amine sulfonamide identified in the Color Index as Foron Yellow SE/GLN, CI Dispersed Yellow 33 2,5-dimethoxy-4-sulfonanilide phenylazo-4'-chloro-2,5-dimethoxy acetoacetanilide, and Permanent Yellow FGL. Colored magnetites, such as mixtures of MAPICO BLACK^{™}, and cyan components may also be selected as colorants. Other known colorants can be selected, such as Levanyl Black A-SF (Miles, Bayer) and Sunsperse Carbon Black LHD 9303 (Sun Chemicals), and colored dyes such as Neopen Blue (BASF), Sudan Blue OS (BASF), PV Fast Blue B2G01 (American Hoechst), Sunsperse Blue BHD 6000 (Sun Chemicals), Irgalite Blue BCA (Ciba-Geigy), Paliogen Blue 6470 (BASF), Sudan III (Matheson, Coleman, Bell), Sudan II (Matheson, Coleman, Bell), Sudan IV (Matheson, Coleman, Bell), Sudan Orange G (Aldrich), Sudan Orange 220 (BASF), Paliogen Orange 3040 (BASF), Ortho Orange OR 2673 (Paul Uhlich), Paliogen Yellow 152, 1560 (BASF), Lithol Fast Yellow 0991 K (BASF), Paliotol Yellow 1840 (BASF), Neopen Yellow (BASF), Novoperm Yellow FG 1 (Hoechst), Permanent Yellow YE 0305 (Paul Uhlich), Lumogen Yellow D0790 (BASF), Sunsperse Yellow YHD 6001 (Sun Chemicals), Suco-Gelb L1250 (BASF), Suco-Yellow D1355 (BASF), Hostaperm Pink E (American Hoechst), Fanal Pink D4830 (BASF), Cinquasia Magenta (DuPont), Lithol Scarlet D3700 (BASF), Toluidine Red (Aldrich), Scarlet for Thermoplast NSD PS PA (Ugine Kuhlmann of Canada), E.D. Toluidine Red (Aldrich), Lithol Rubine Toner (Paul Uhlich), Lithol Scarlet 4440 (BASF), Bon Red C (Dominion Color Company), Royal Brilliant Red RD-8192 (Paul Uhlich), Oracet Pink RF (Ciba-Geigy), Paliogen Red 3871K (BASF), Paliogen Red 3340 (BASF), and Lithol Fast Scarlet L4300 (BASF).

In one EA toner preparation, when the nano-sized core-shell polymer particles are used as a binder resin, an emulsion of the nano-sized particles disclosed herein is transferred into a glass resin kettle equipped with a thermal probe and mechanical stirrer. Colorant may optionally be added into this reactor while stirring. Additionally, a wax dispersion may optionally be added for oil-less systems. The mixture is stirred and heated using an external water bath to a desired temperature, for example from about 40°C to about 70°C, such as from about 45°C to about 70°C or from about 40°C to about 65°C, at a rate from about 0.25°C/min. to about 2°C/min., such as from about 0.5°C/min. to about 2°C/min. or from about 0.25°C/min. to about 1.5°C/min. A freshly prepared solution of a coalescing agent is made to ensure efficacy of the aggregation. Once the emulsion reaches the desired temperature, the solution of a coalescing agent is pumped into the mixture, for example through a peristaltic pump. The addition of the solution of coalescing agent is completed after, for example, from about 1 hour to about 5 hours, such as from about 1 hour to about 4 hours or from about 1.5 hours to about 5 hours, and the mixture is additionally stirred from about 1 hour to about 4 hours, such as from about 1 hour to about 3.5 hours or from about 1.5 hours to about 4 hours. The temperature of the reactor may then be raised towards the end of the reaction to, for example, from about 45°C to about 75°C, such as from about 50°C to about 75°C or from about 45°C to about 70°C, to ensure spheridization and complete coalescence. The mixture is then quenched with deionized water that is at a temperature of, for example, from about 29°C to about 45°C, such as from about 32°C to about 45°C or from about 29°C to about 41 °C. The slurry is then washed and dried.

In further EA toner formulations, a dispersion may be made by first homogenizing then mixing the nano-sized particles disclosed herein, optional colorant, and a coagulating agent at a temperature at or above the Tg of the resin, such as 5°C to about 50°C above the Tg of the resin, which Tg is usually in the range of from about 50°C to about 80°C or is in the range of from about 52°C to about 65°C. The mixture is grown to a desired size, such as from about 3 microns to about 30 microns, for example from about 4 microns to about 15 microns or from about 5 microns to about 10 microns. The nano-sized particles are then coalesced at an elevated temperature, such as from about 60°C to about 98°C, until a suitable shape and morphology is obtained, in order to form toner particles. The toner particles are then optionally subjected to further processing, for example, such as wet sieving, washing by filtration, and/or drying. The slurry may then be washed to remove impurities. The washing may involve base addition, addition of an optional enzyme product and mixing for several hours. The toner particles are then filtered to a wet cake, reslurried with deionized water and mixed. After mixing, the slurry is dewatered, added to deionized water, pH adjusted and mixed. The pH is adjusted to be from about 3 to about 5, such as from about 3.5 to about 5 or from about 3 to about 4.5. The particles are then dewatered again and reslurried with a smaller amount of water to better disperse during the drying process. The parent toner particles are then dried using a drier and packaged.

The foregoing are merely a few examples of an EA process, other processes include the production of polyester EA toner which may be made in a different manner.

The nano-sized particles described herein are present in place of a resin in various effective amounts, such as from about 30 weight percent to about 98 weight percent of the toner, such as from about 40 weight percent to about 95 weight percent or from about 50 weight percent to about 90 weight percent, and can be of small average particle size, such as from about 5 nm to about 1 micron in average volume diameter as measured by the Brookhaven nanosize particle analyzer.

In embodiments, in addition to the colorants, the toner particles may include other components such as waxes, curing agents, charge additives, and surface additives.

Examples of waxes include functionalized waxes, polypropylenes and polyethylenes commercially available from Allied Chemical and Petrolite Corporation, wax emulsions available from Michaelman Inc. and the Daniels Products Company, EPOLENE N-15 commercially available from Eastman Chemical Products, Inc., VISCOL 550-P, a low weight average molecular weight polypropylene available from Sanyo Kasei K.K., and similar materials. Commercially available polyethylenes usually possess a molecular weight of from about 1,000 to about 1,500, while the commercially available polypropylenes are believed to have a molecular weight of from about 4,000 to about 5,000. Examples functionalized waxes include amines, amides, imides, esters, quaternary amines, carboxylic acids or acrylic polymer emulsion, for example JONCRYL 74, 89, 130, 537, and 538, all available from SC Johnson Wax, and chlorinated polypropylenes and polyethylenes commercially available from Allied Chemical and Petrolite Corporation and SC Johnson wax. When utilized, the wax may be present in the dye complex in an amount from about 2 weight percent to about 20 weight percent, such as from about 3 weight percent to about 15 weight percent or from about 4 weight percent to about 12 weight percent, of the toner.

The toner may also include known charge additives in effective amounts of, for example, from 0.1 to 5 weight percent, such as alkyl pyridinium halides, bisulfates, the charge control additives of U.S. Patents Nos. 3,944,493, 4,007,293, 4,079,014, 4,394,430 and 4,560,635, which illustrate a toner with a distearyl dimethyl ammonium methyl sulfate charge additive, the disclosures of which are totally incorporated herein by reference, negative charge enhancing additives like aluminum complexes, and the like.

Surface additives that can be added to the toner compositions after washing or drying include, for example, metal salts, metal salts of fatty acids, colloidal silicas, metal oxides like titanium, tin and the like, mixtures thereof and the like, which additives are usually present in an amount of from about 0.1 to about 2 weight percent, reference U.S. Patents Nos. 3,590,000, 3,720,617, 3,655,374 and 3,983,045, the disclosures of which are totally incorporated herein by reference. Additives include, for example, titania and flow aids, such as fumed silicas like AEROSIL R972^{®} available from Degussa Chemicals, or silicas available from Cabot Corporation or Degussa Chemicals, each in amounts of from about 0.1 to about 2 percent, which can be added during the aggregation process or blended into the formed toner product.

The following examples are illustrative of embodiments of the present invention, but are not limiting of the invention. It will be apparent that the invention can be practiced with many different water dispersible polymers, initiators and monomers and can be used for a variety of different uses in accordance with the disclosure above and as pointed out hereinafter.

### EXAMPLE

About 862.9 g of water was added to about 150.1 g of CERAMER 1608 (maleated polyethylene), and heated to about 80°C. A solution of sodium hydroxide (about 21 g in about 60 g of water) was added, and the mixture stirred for about 10 minutes to provide a nano-sized dispersion of about 4.5 nm. Then, potassium persulfate solution (about 2.04 g of K₂S₂O₈ in about 23 g of water) was added at once to the mixture, and a monomer solution of styrene (about 52 mL), butyl acrylate (about 17 mL), beta-carboxyethylacrylic acid (about 3.7 g) and dodecylthiol (about 5.62 g) was added in a dropwise manner over about 165 minutes. The dispersion was heated for a total of about 8 hours at about 80°C.

The particle size increased from about 4.5 nm to about 9.7 nm. In addition, the core/shell particle demonstrated retention of the crystalline polyester properties, that is, the particle exhibited a specific melting point and a specific recrystallization point. The particle generated by the Example had a melting point of about 90.46°C and a recrystallization point of about 36.93°C.

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims. Unless specifically recited in a claim, steps or components of claims should not be implied or imported from the specification or any other claims as to any particular order, number, position, size, shape, angle, color, or material.

## Claims

1. A nano-sized particle having a core portion and a shell portion,
wherein the core portion comprises a crystalline polymer,
wherein the shell portion comprises a polymer derived from at least one monomer not miscible with the crystalline polymer of the core, and
wherein the nano-sized particle has a melting point of from about 50°C to about 140°C and a recrystallization point of from about 30°C to about 80°C.

2. The nano-sized particle according to claim 1, wherein the core portion and/or the shell portion has a hydrophilic functional group selected from a carboxyl, a sulfonic acid, an amine, an amine salt, and a phosphonic salt.

3. The nano-sized particle according to claim 1, wherein the crystalline polymer is selected from the group consisting of a crystalline polyester, a wax polymer, a polyolefin, polyketone, polyamide, and mixtures thereof.

4. The nano-sized particle according to claim 3, wherein the wax polymer is selected from the group consisting of polyethylene, polypropylene, polypentene, polydecene, polydodecene, polytetradecene, polyhexadecene, polyoctadene, polycyclodecene and mixtures thereof.

5. The nano-sized particle according to clam 3, wherein the polyolefin is selected from the group consisting of bi-modal molecular weight polyolefins, functional polyolefins, acidic polyolefins, hydroxyl polyolefins, branched polyolefins and mixtures thereof.

6. The nano-sized particle according to claim 1, wherein the melting point is from about 75°C to about 95°C, and the recrystallization point is from about 35°C to about 60°C.

7. The nano-sized particle according to claim 1, wherein the nano-sized particles have an average particle size of from about 1 nm to about 100 nm.

8. A process for making emulsion aggregation toner particles, comprising:
mixing nano-sized particles, a coagulating agent, and optionally a colorant;
aggregating the nano-sized particles to form toner particles to a size from about 1 to about 20 microns;
halting the aggregation of the toner particles; and
coalescing the toner particles,
wherein the nano-sized particles comprise a core portion and a shell portion,
wherein the core portion comprises a crystalline polymer, and wherein the shell portion comprises a polymer derived from at least one monomer not miscible with the crystalline polymer of the core.

9. An emulsion aggregation toner composition comprising toner particles including a binder resin and optionally a colorant,
wherein the binder resin includes nano-sized particles comprising a core portion and a shell portion, wherein the core portion comprises a crystalline polymer, and wherein the shell portion comprises a polymer derived from at least one monomer not miscible with the crystalline polymer of the core.

10. The toner composition according to claim 9, wherein the core portion and/or the shell portion has a hydrophilic functional group selected from a carboxyl, a sulfonic acid, an amine, an amine salt, and a phosphonic salt.
